# EUROPÄISCHE PATENTSCHRIFT

(11) **EP 0 568 791 B1**
(45) Veröffentlichungstag und Bekanntmachung des Hinweises auf die Patenterteilung: **21.05.1997**
(21) Anmeldenummer: 93103709.7
(22) Anmeldetag: 09.03.1993
(51) Int. Cl.: C08J 11/08, B29B 17/02

(54) **Verfahren zur Aufbereitung von Verpackungsmaterialien**
Process for regenerating packaging materials
Procédé pour la régénération de matériaux d'emballage

(30) Priorität: 07.05.1992 DE 4214527
(43) Veröffentlichungstag der Anmeldung: 10.11.1993
(73) Patentinhaber: Linde Aktiengesellschaft, 65189 Wiesbaden (DE)
(72) Erfinder: Thome, Roland, Dr., W-5300 Bonn 1 (DE); Unger, Baldur, Dr., W-6421 Reichmannsdorf (DE); Gruber, Peter, W-5210 Troisdorf (DE); Tissler, Arno, Dr., W-5300 Bonn (DE); Schubert, Jürgen, W-5307 Wachtberg (DE)
(74) Vertreter: Kasseckert, Rainer

(56) Entgegenhaltungen:
- WO-A-92/05215
- US-A- 4 175 211

## Beschreibung

Die Erfindung betrifft ein Verfahren zur Aufbereitung von Verpackungsmaterialien, die ein oder mehrere synthetische Polymere und/oder Metall und/oder natürliche Polymere enthalten, unter Auflösung des Anteils an synthetischen Polymeren in einem Lösungsmittel und Rückgewinnung von löslichen und nicht löslichen Verpackungsbestandteilen.

Verpackungen, die ein oder mehrere synthetische Polymere enthalten, insbesondere solche, die aus einem Verbund von unterschiedlichen Materialien (synthetische Polymere, Karton bzw. Papier, Metallfolie) bestehen, haben in den vergangenen Jahren einen wesentlichen Anteil am Verpackungsmittelmarkt erobert. Derzeit werden in Deutschland jährlich ca. 160.000 Tonnen an unterschiedlichen Verbundverpackungen verbraucht. Die wesentlichen Vorteile derartiger Verpackungsmaterialien liegen in ihrer (massebezogen) hohen Aufnahmekapazität sowie in dem, von keinem vegleichbaren Material erreichten Konservierungseffekt begründet. Nachteilig ist, daß die genannten Verbunde naturgemäß größtenteils lediglich als Einwegverpackungen genutzt werden könnnen und somit bislang nach einmaligem Gebrauch dem Hausmüll zuzuordnen waren.

Im Zusammenhang mit der in den zurückliegenden Jahren aufgrund der stetig anwachsenden Mengen an Müll (insbesondere Hausmüll) und der damit verbundenen Problematik der schadstoffarmen bzw. -freien Beseitigung, die ihre Widerspiegelung in einer verschärften Umweltgesetzgebung findet, ergibt sich die Notwendigkeit, möglichst wenig Müll zu deponieren bzw. energetisch zu nutzen (Müllverbrennung), sondern bevorzugt stofflich wiederzuverwerten [J.-P. Wetzel, Swiss Chem 3 (19992)17].

Dies ist bei der überwiegenden Zahl von Einstoffmaterialien realisierbar. Größere Probleme ergeben sich hingegen beim stofflichen Recycling von Verbundmaterialien. Hier ist der eigentlichen Rückführung in den Stoffkreislauf in jedem Fall ein mehr oder weniger aufwendiger Trennprozeß voranzustellen. Bisher bekannte Verfahren zum Recycling von Verpackungsverbundmaterialien beruhen auf Löse-Rückgewinnungs- bzw. thermisch-abbauenden Trennverfahren. So wird beispielsweise der organische Anteil in Verpackungsverbunden pyrolytisch zersetzt, wobei ein Pyrolyseprodukt in Form von Gasen, Flüssigkeiten und Feststoffen entsteht, welches teils energetisch, teils (katalytisch-) stofflich verwertet werden kann, sowie die Metallkomponente in praktisch reiner Form zurückbleibt. Nachteilig bei diesem Verfahren ist, daß der überwiegende Teil des Ersatzproduktes nur energetisch verwertet werden kann und außerdem in einem derartigen Pyrolyseprozeß ökologisch bedenkliche Stoffe entstehen können.

Weiterhin sind Verfahren bekannt, bei denen die Metallkomponente selektiv aus den Verbunden herausgelöst wird und die Karton- bzw. Kunststofffraktionen in reiner Form zurückbleiben [JP 750 722]. Bei derartigen Verfahren ist von Nachteil, daß die gelöste Metallkomponente (meist Aluminium in Form einer entsprechenden Salzlösung) gegenüber der elementaren Form von geringerem Wert ist. Verfahren, die die Trennung der Verbundstoffe durch "Anlösen" der Metallkomponente bewirken, haben den Nachteil, daß ein Teil der Metallkomponente in Lösung geht und sich damit in der Lösekomponente anreichert, andererseits die Lösekomponente zumindest partiell vom Polymeranteil aufgenommen wird und damit eine direkte Wiederverwendung desselben erheblich erschwert.

Verfahren zur Auflösung des Polymeranteils in Verbunden sind ebenfalls bekannt [DE 26 39 864, JP 740 816, JP 760 903]. Bei diesen Verfahren ist nachteilig, daß das (gegebenenfals fraktioniert) gelöste Polymer (bzw. Polymerengemisch) anschließend aus der Lösung durch Ausfrieren oder Extraktion wiedergewonnen werden soll. Neben dem relativ hohen apparativen und stofflichen Aufwand ist auch bei diesen Verfahren stets damit zu rechnen, daß ein Teil des Lösungs- bzw. Extraktionsmittels als Rückstand im Polymeren verbleibt und einer einfachen Wiederverwendung entgegensteht.

WO-A-9 205 215 beschreibt ein bei 40-280°C durchgeführtes Verfahren zum Rezyklieren von Verbundwerkstoffen, wobei der Polymeranteil als polymeres Granulat zurückgewonnen wird.

Aufgabe der vorliegenden Erfindung ist es, ein kostengünstiges und umweltfreundliches Verfahren zur Aufbereitung von Verpackungsmaterialien, die ein oder mehrere synthetische Polymere und/oder natürliche Polymere und ggf. Metalle enthalten, insbesondere Verpackungsverbunde, zu entwickeln.

Die Nachteile der bekannten Verfahren sollen dabei weitestgehend vermieden werden. Es soll insbesondere der Anteil an synthetischen Polymeren wiederverwendungsfähig abgetrennt werden.

Die in Verpackungsverbunden enthaltenen weiteren Komponenten, wie die in Karton und Papier enthaltenen natürlichen Polymere, insbesondere Cellulose, und Metall, insbesondere Aluminium, sollen dabei ebenfalls vollständig als stofflich wiederverwertbare Einzelkomponenten erhalten werden.

Erfindungsgemäß wird diese Aufgabe durch ein Verfahren gelöst, bei dem die aufzubereitenden Verpackungsmaterialien mit einem Lösungsmittel behandelt werden, das aus aliphatischen, naphthenischen oder aromatischen Kohlenwasserstoffen, deren hydrierte "Produkte" oder einer Mischung davon besteht. Die Lösungsmittelbehandlung erfolgt, bis der Anteil an synthetischen Polymeren gelöst ist. Die Behandlungstemperatur liegt zwischen 0 und 500 °C. Als Lösungsmittel werden insbesondere Siedefraktionen der primären und sekundären Erdölverarbeitung eingesetzt, deren Siedegrenzen im Bereich zwischen 40 und 500 °C liegen. Im Ergebnis des Behandlungsprozesses entsteht ein flüssiges Gemisch aus Kohlenwasserstoffen unterschiedlicher Struktur und Molekülmasse, in denen die nicht löslichen Verpackungsbestandteile dispergiert sind. Diese nicht löslichen Verpackungsbestandteile, wie Cellulosereste und Aluminium, werden von der flüssigen Phase getrennt. Nach der Abtrennung der nicht löslichen Verpackungsbestandteile erfolgt erfindungsgemäß die Abtrennung des gelösten Polymeranteils aus dem flüssigen Gemisch. Außerdem erfolgt die Abtrennung des gelösten Polymeranteils durch thermische Spaltung des flüssigen Gemisches bei Temperaturen zwischen 400 und 2000 °C und einem Druck zwischen 0,1 und 3,0 MPa. Hierbei wird das Lösungsmittel zusammen mit den gelösten Polymerbestandteilen zu Spaltprodukten mit monomerem Charakter umgesetzt. Das Gemisch kann auf bekannte Weise in die entsprechenden Einzelstoffe zerlegt werden. Die verbleibenden nicht löslichen Verpackungsbestandteile können ebenfalls unter Anwendung bekannter Verfahren in die entsprechenden Einzelkomponenten separiert werden. Auf diese Weise gelingt ein abproduktfreies Recycling sämtlicher Bestandteile der eingesetzten Verpackungsmaterialien. Unterhalb von 400 °C entstehen bei der thermischen Spaltung die gewünschten gasförmigen Spaltprodukte nicht bzw. nur in geringen Mengen. Temperaturen von 2000 °C sollten nicht überschritten werden, da dies einen unwirtschaftlich hohen Materialaufwand notwendig macht. Die Anwendung hoher Drucke oberhalb von 3 MPa führt zur bevorzugten Bildung flüssiger Spaltprodukte. Gleichzeitig besteht bei derartig hohen Drucken die Gefahr einer Rückreaktion der Spaltprodukte zu Polymeren.

Die Anwendung von Unterdruck (kleiner 0,1 MPa) bedingt einen unwirtschaftlich hohen apparativen Aufwand.

Im Hinblick auf die Maximierung der Ausbeuten an gasförmigen Spaltprodukten sowie der gewünschten Zusammensetzung des Spaltproduktgemisches hat es sich als besonders günstig erwiesen, die thermische Spaltung bei Temperaturen zwischen 650 und 1200 °C und Drucken zwischen 0,1 und 0,3 MPa durchzuführen.

Die thermische Spaltung kann begünstigt werden durch Einbringen von Wasser bzw. Wasserdampf. Dadurch kann einerseits eine unzulässig starke Koksbildung verhindert werden. Andererseits wird durch diese Maßnahme eine Rückreaktion der Spaltprodukte zu Polymeren weitgehend unterdrückt. Die einzubringende Menge an Wasser bzw. Wasserdampf richtet sich im wesentlichen nach der Art der in der Lösestufe verwendeten Lösungsmittel. Dabei erfordert der Einsatz höhersiedender wasserstoffärmerer Fraktionen die Zugabe größerer Mengen an Wasser bzw. Wasserdampf, um die Bildung der gewünschten olefinischen Monomeren zu fördern und gleichzeitig eine starke Koksablagerung in der Anlage zu vermeiden. Unter den Bedingungen des erfindungsgemäßen Verfahrens liegt die eingebrachte Menge an Wasser bzw. Wasserdampf bevorzugt zwischen 0,1 und 100 prozentualen Massenanteilen bezogen auf das organische Einsatzprodukt.

In vorteilhafter Ausführungsform des erfindungsgemäßen Verfahrens wird die thermische Spaltung des in der Lösestufe gebildeten Gemisches aus Kohlenwasserstoffen unterschiedlicher Struktur und Molekülmassen in Anlagen durchgeführt, deren Kernstück aus einem oder mehreren Strömungsrohrreaktoren besteht, die angepaßt an den jeweiligen Anwendungsfall in unterschiedlicher Art und Weise angeordnet und beheizt sein können. Der Einsatz derartiger Strömungsreaktoren erlaubt eine einfache Steuerung der Verweilzeit, so daß die Zusammensetzung des Spaltproduktes sehr leicht in die gewünschte Richtung gelenkt werden kann. Eine Rückvermischung findet in diesen Reaktoren nicht statt, und unerwünschte Rückreaktionen der Spaltprodukte zu Polymeren werden unterdrückt.

Überraschend ist, daß im Ergebnis einer derartigen thermischen Spaltung der in der Lösestufe gebildeten "Polymerlösungen" große Mengen an organischen Stoffen mit Monomerencharakter entstehen, wobei die Zusammensetzung des Spaltproduktgemisches im wesentlichen durch das eingesetzte Lösungsmittel bestimmt wird und weitgehend unabhängig von der Art der gelösten Polymere ist. Als Hauptprodukte der thermischen Spaltung entstehen Ethylen, Propylen und Buten, daneben weitere Gase wie z.B. Ethan, Propan. Butan und Flüssigprodukte wie z.B. Benzol, Toluol, Xylol, Ethylbenzol mit Monomerencharakter. Die Aufarbeitung der Reaktionsprodukte kann auf bekannte Weise erfolgen, z.B. in Analogie zum Prozeß des Naphthasteamcrackens (K. Weissermel und H.-J. Arpe: "Industrielle organische Chemie" VCH Verlagsgesellschaft mbH, Weinheim 1988, S. 68 ff.).

In einer weiteren bevorzugten Ausgestaltung des erfindungsgemäßen Verfahrens gemäß Anspruch 9 erfolgt die Abtrennung der gelösten Polymerbestandteile aus dem flüssigen Gemisch unter partieller Rückführung des Lösungsmittels durch Kühlung und/oder Fällung, wobei zur Aufrechterhaltung einer niedrigen stationären Polymerkonzentration ein Teil des Lösungsmittels ausgekreist und durch frisches Lösungsmittel ersetzt wird. Vorteilhafterweise wird das flüssige Gemisch nach der Fällung einer Waschung unterworfen, wobei fein verteilte, nicht lösliche Bestandteile freigelegt und als Sediment abgetrennt oder mit Mineralsäuren aufgelöst werden. Das als Waschmittel verwendete Lösungsmittel wird filtriert und einer Destillation zwecks Rückgewinnung unterworfen. Als Fällungsmittel werden niedere Alkohole verwendet. Insbesondere eignen sich Methanol, Ethanol, Propan-2-ol (i-Propanol) dazu, die Löslichkeit des synthetischen Polymers in der Lösungsmittelphase soweit zu verringern, daß das Polymer ausfällt. Die Fällung des Polymers durch Einsatz niederer Alkohole kann unterstützt werden durch Abkühlung der flüssigen Mischung.

In einer besonders vorteilhaften erfindungsgemäßen Weiterbildung gemäß Anspruch 13 kann das nach Abtrennung der gelösten Polymerbestandteile, durch Kühlung und/oder Fällung ausgekreiste, noch gelöstes Polymer enthaltende Lösungsmittel einer thermischen Spaltung unterworfen werden. Als feste Einsatzstoffe des erfindungsgemäßen Verfahrens dienen insbesondere Verpackungverbunde, die aus Kombinationen der Systeme synthetisches Polymer/Metall, synthetisches Polymer/Karton bzw. Papier und/oder synthetisches Polymer/Metall/Karton bzw. Papier bestehen.

Mit dem Begriff "synthetische Polymere" werden im Zusammenhang der vorliegenden Erfindung insbesondere auch Kunststoffe der Typen: Polyolefine, Polyester, Polyamide und Polyurethane bezeichnet. Diese Stoffe werden unter den Bedingungen des erfindungsgemäßen Verfahrens praktisch vollständig gelöst. Metallische Komponente der Einsatzstoffe ist vorzugsweise Aluminium. Besonders geeignet für das erfindungsgemäße Verfahren sind Verpackungsverbunde, bei denen Kartonkomponente vorher in einem dem Fachmann bekannten Verfahren des Celluloserecycling aus dem Verbund abgetrennt wurde. Die in diesem Fall verbleibenden Metall/Polymer-Verbunde werden auch als "rejects" bezeichnet. Des weiteren können nach dem erfindungsgemäßen Verfahren auch Polymerverpackungsmaterialien aufbereitet werden, die weder Metall- noch Karton- bzw. Papierkomponenten enthalten.

Als Lösungsmittel für das erfindungsgemäße Verfahren eignen sich insbesondere Leichtbenzin, Pyrolysebenzin, Naphtha, Gas- oder Mittelöle sowie deren Folgeprodukte, wie z.B. Diesel-, hydrierte Diesel-, Heizöle, Alkane, Cycloalkane oder Paraffinfraktionen, wobei höhersiedende Gemische aus verarbeitungstechnischen Gründen bevorzugt werden. Die Verwendung dieser Lösungsmittel gewährleistet einerseits die Auflösung der im Verpackungsmaterial enthaltenen synthetischen Polymere und gleichzeitig eine vollständige Abtrennung nicht löslicher Verpackungsbestandteile, wie z.B. Cellulose und Aluminium. Zudem wird es möglich, das bei der Auflösung erhaltene flüssige Gemisch durch eine thermische Spaltung in ein Gemisch aus Spaltprodukten mit Monomerencharakter umzusetzen.

Unter dem Ausdruck "höhersiedendes Gemisch" werden erfindungsgemäß Naphtha und Mittelöle sowie deren obengenannte Folgeprodukte (Diesel-, hydrierte Diesel- und Heizöle) verstanden.

Für eine erfolgreiche Durchführung des erfindungsgemäßen Verfahrens ist es besonders wichtig, daß bei hohen Lösetemperaturen gearbeitet werden kann, damit unter Anwendung des eingesetzten Lösungsmittels auch die synthetischen Polymere in dem Verpackungsmaterial nahezu vollständig innerhalb kürzester Zeit aufgelöst werden können. Insbesondere die erfindungsgemäß vorgeschlagenen Mittelöle, aber auch Naphtha, weist bei den angestrebten hohen Lösetemperaturen einen geringen Eigendampfdruck auf. Deshalb werden sie aus verarbeitungstechnischen Gründen bevorzugt in der Lösestufe eingesetzt.

Die bei der Behandlung des Verpackungsmaterials eingestellte Temperatur liegt zwischen 0 und 500 °C. Unterhalb von 0 °C ist nur eine allenfalls geringe Auflösungsgeschwindigkeit des Polymeranteils zu erzielen. Mit zunehmender Temperatur steigt die Auflösungsgeschwindigkeit, wobei die maximal anwendbare Temperatur bestimmt wird durch die Siedegrenze des verwendeten Lösungsmittels bzw. Lösungsmittelgemischs. Eine Temperatur von 500 °C sollte daher nicht überschritten werden.

Für das erfindungsgemäße Verfahren werden vorzugsweise Temperaturen im Bereich zwischen 50 und 150 °C angewendet. Die Lösetemperatur liegt dann etwa im Temperaturbereich des vorerhitzten Rohstoffs einer konventionellen thermischen Spaltanlage bzw. unterhalb der als Fällungsmittel verwendeten niederen Alkohole.

Nicht lösliche Verpackungsbestandteile unterschiedlicher Art, wie z.B. die Cellulosefasern von Karton bzw. Papier und Aluminium, werden unter den Bedingungen des erfindungsgemäßen Verfahrens innerhalb der Lösestufe voneinander getrennt. Nach Abtrennung der nicht gelösten Verpackungsbestandteile aus der Lösung liegen diese als mechanisches Gemisch vor und können daher auf einfache Weise in die entsprechenden Einzelstoffe separiert werden. Diese Aufteilung kann z.B. erfolgen durch Anwendung der Wirbelstromabscheidetechnologie, gegebenenfalls nach vorgeschalteter Trocknung des Festkörpergemisches.

Aus einem Verpackungsverbund, der z.B. aus Kombinationen der Systeme synthetisches Polymer/Aluminium/Karton besteht, kann die Kartonkomponente in einem der Lösestufe vorangestellten Prozeß, z.B. in einer wäßrigen Phase, vom Verbund abgelöst und abgetrennt werden. Nach Auflösung des Polymeranteils in der Lösestufe bleibt in diesem Fall die reine Metallkomponente zurück.

Bei der erfindungsgemäßen Abtrennung des gelösten Polymeranteils durch thermische Spaltung wird das Verfahren in den Stofffluß einer petrolchemischen Raffinerie eingebunden.

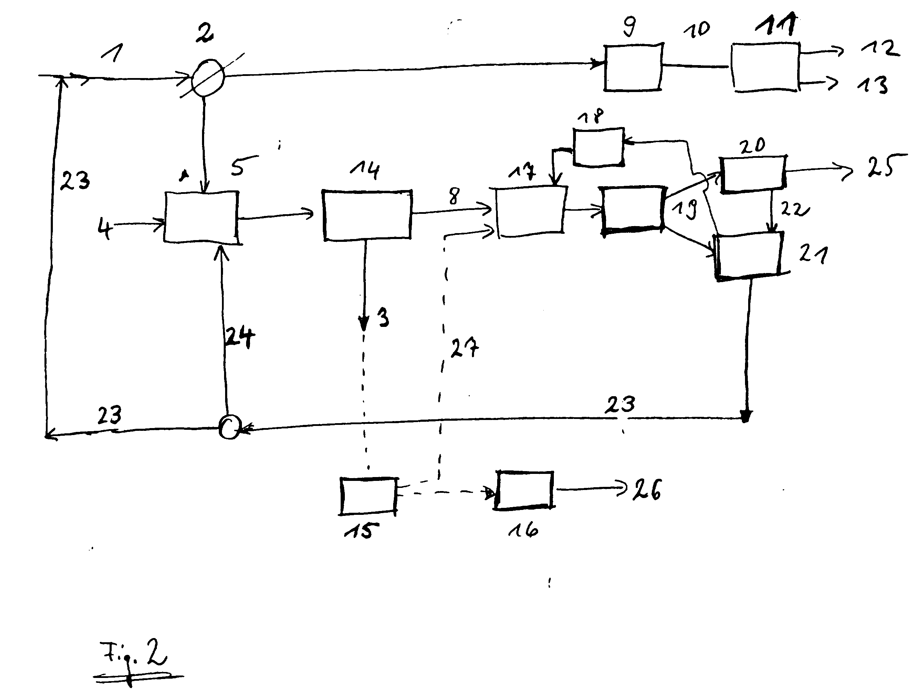

Fig. 1 zeigt grundsätzliche Möglichkeiten einer derartigen Einbindung.

Zur Einbindung wird ein Teil der Anlage gewählt, in dem eine Siedefraktion 1 einem Steamcracker 9 zugeführt wird. In dem Steamcracker 9 wird die thermische Spaltung der Siedefraktion durchgeführt, wobei ein Spaltproduktgemisch 10 entsteht. Das Spaltproduktgemisch 10 wird in einer Trennstufe 11 in ein Gasprodukt 12 und ein Flüssigprodukt 13 zerlegt.

Als Lösungsmittel in der Lösestufe 5 des erfindungsgemäßen Verfahrens wird dann entweder ein Teil der Siedefraktion 1 oder ein Teil des Flüssigproduktes 13 verwendet. Mit dem jeweiligen Lösungsmittel wird das Verpackungsmaterial 4 unter erfindungsgemäßen Bedingungen behandelt. Das erhaltene flüssige Gemisch 8 aus Kohlenwasserstoffen unterschiedlicher Struktur und Molekülmasse wird nach Abtrennung 6 nicht löslicher Verpackungsbestandteile 7 der dem Steamcracker 9 zufließenden Siedefraktion 1 zugegeben. Gegebenenfalls wird die Siedefraktion 1 in einem Vorerhitzer 2 auf die für die Behandlung des Verpackungsmaterials notwendige Temperatur gebracht. Im Steamcracker 9 wird das aus der Lösestufe 5 erhaltene flüssige Gemisch 8 zusammen mit der Siedefraktion 1 thermisch gespalten. Die Zusammensetzung des dabei erhaltenen Spaltproduktgemisches kann hierbei durch entsprechende Einstellung des Mischungsverhältnisses zwischen dem flüssigen Gemisch 8 und der Siedefraktion 1 in die gewünschte Richtung gesteuert werden.

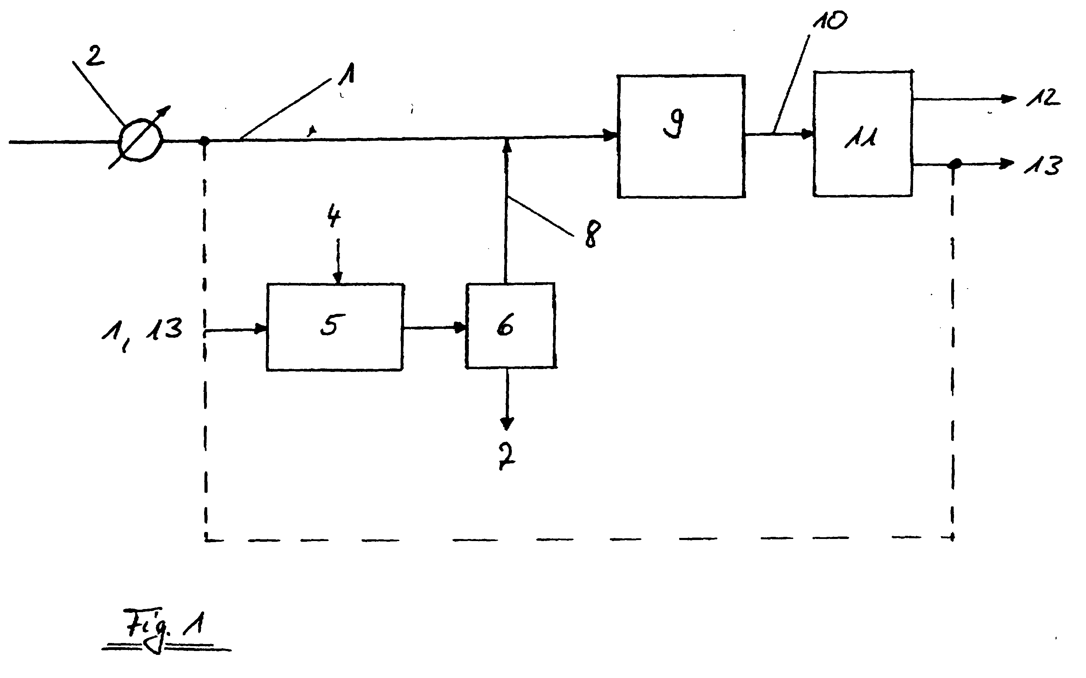

Figur 2 zeigt den grundsätzlichen Stofffluß bei der erfindungsgemäßen Abtrennung des gelösten Polymeranteils durch Fällung.

In der Lösestufe 5 dieser erfindungsgemäßen Ausführungsform wird das Verpackungsmaterial 4 unter erfindungsgemäßen Bedingungen behandelt. Das erhaltene flüssige Gemisch 8 aus Kohlenwasserstoffen unterschiedlicher Struktur und Molekülmasse wird einer Trennstufe 14 zugeführt. In der Trennstufe 14 erfolgt die Abtrennung der festen Phase 3, die nach Durchlaufen eines Wäschers 15 und eines Trockners 16 zu einem wiederverwendungsfähigen Metall 26 führt. Das von der unlöslichen festen Phase 3 befreite flüssige Gemisch 8 wird in die Fällungsstufe 17 überführt. Nach Zugabe eines Fällungsmittels 18 und Filtration 19 wird das gefällte Polymer in einem Wäscher 20 gewaschen und als wiederverwendbares Polymer 25 weiterverwendet.

Das Filtrat wird einer Destillation 21 unterworfen. Hierbei wird das Fällungsmittel 18 vom Lösungsmittel getrennt und wieder der Fällungsstufe 17 zugeführt. Das im Wäscher 20 anfallende Lösungsmittel-Fällungsmittel-Gemisch 22 wird ebenfalls der Destillation 21 zugeführt. Auch das im Wäscher 15 anfallende Lösungsmittel 27 wird wieder der Fällungsstufe 17 zugeführt. Das aus der Destillation 21 austretende Lösungsmittel 23, das noch geringe Mengen gelöstes Polymer enthalten kann, wird über die Lösungsmittelrückführung 24 wieder der Lösestufe 5 zugeführt. Zur Aufrechterhaltung einer niedrigen stationären Polymerkonzentration wird ein Teil des Lösungsmittels 23 ausgekreist und kann über den Vorerhitzer 2 wieder einem Steamcracker 9 zugeführt werden.

Nachfolgend wird das erfindungsgemäße Verfahren anhand von Beispielen näher erläutert.

### Beispiel 1 (Vergleichsbeispiel)

In diesem Beispiel wird ein industrielles Kohlenwasserstoff-Gemisch im Naphtha-Siedebereich einer thermisch-spaltenden Behandlung gemäß Beispiel 6 unterworfen.

### Beispiel 2

15 g eines Verpackungsmaterials, welches zu 99 % aus Polyethylen besteht, werden zerkleinert und unter Rühren in 500 ml eines Kohlenwasserstoff-Gemisches im Siedebereich von Dieselkraftstoff eingebracht. Das Gemisch wird auf 80 °C erhitzt, wobei das Polyethylen vollständig in Lösung geht. Dieses Gemisch wird einer thermisch-spaltenden Behandlung gemäß Beispiel 6 unterworfen.

### Beispiel 3

30 g eines "reject"-Materials, welches sich nach vorheriger Abtrennung der Kartonkomponente im Cellulose-Recycling aus dem System Polyethylen/Aluminium/Polyethylen mit einem Polymeranteil von ca. 80 Massenteilen in Prozent zusammensetzt, werden unter Rühren einem Kohlenwasserstoff-Gemisch im Siedebereich von Naphtha (Rohbenzin) zugesetzt. Nach Erhitzen dieses Gemisches auf 100 °C haben sich beide Polymerkomponenten vollständig aufgelöst. Die zurückbleibende Aluminiumkomponente wird durch Filtration abgetrennt, mit Leichtbenzin gewaschen und getrocknet. Das anfallende Gemisch aus organischen Substanzen unterschiedlicher Struktur und Molekülmasse wird einer thermischspaltenden Behandlung gemäß Beispiel 6 unterworfen.

### Beispiel 4

30 g eines von Lebensmittelresten frei gewaschenen Verpackungsverbundes, welcher sich aus dem System Polyethylen/Karton/Polyethylen/Aluminium/Polyethylen mit Polymeranteil von ca. 10 Massenteilen in Prozent zusammensetzt, wird zerkleinert und unter Rühren einem Kohlenwasserstoff-Gemisch im Siedebereich von Naphtha (Rohbenzin) zugesetzt. Das Gemisch wird auf 75 °C erhitzt, wobei alle Polyethylenanteile vollständig in Lösung gehen. Das Gemisch wird durch Filtration über eine Fritte der Porenweite DIN-G-1 getrennt. Auf der Fritte verbleiben Karton- und Aluminiumteilchen, die über einen Zeitraum von 2 Stunden im Vakuumtrockenschrank bei 0,01 MPa und einer Temperatur von 150 °C getrocknet und schließlich mechanisch getrennt werden. Die anfallende Polymeren-haltige organische Phase wird einer thermisch-spaltenden Behandlung gemäß Beispiel 6 unterworfen.

### Beispiel 5

30 g eines Verpackungsverbundes, welcher sich aus dem System Polyethylen/Karton/Polyethylen/Aluminium/Polyethylen mit einem Polymeranteil von ca. 10 Massenteilen in Prozent zusammensetzt, wird zerkleinert und einem Paraffingemisch aus dem Molsieb-Trennprozeß der Erdölverarbeitung unter Rühren bei einer Temperatur von 75 °C zugegeben. Die Polyethylenkomponente wird in kurzer Zeit völlig aufgelöst und die verbleibenden Karton- und Aluminiumreste durch Heißfiltration abgetrennt. Diese Restteilchen werden im Vakuumtrockenschrank getrocknet und anschließend manuell sortiert.

### Beispiel 6

Die thermisch-spaltende Behandlung des im Ergebnis des Lösens der Polymerkomponenten entstehenden Gemisches aus Kohlenwasserstoffen unterschiedlicher Struktur und Molekülmasse erfolgte in einem Quarzglas-Laborrohrreaktor mit elektrischer Heizung bei einer Reaktorausgangstemperatur von 830 °C und Normaldruck (0,1 MPa). Dem organischen Ausgangsgemisch wurde jeweils die gleiche Masse an Wasser zugesetzt und dieses Gesamtgemisch bei 80 °C unter intensivem Rühren emulgiert. Das Reaktionsprodukt wurde unmittelbar nach Austritt aus dem Reaktionsrohr durch eine mit Wassereis/Wasser gefüllte Kühlfalle geleitet und dabei Flüssig- und Gasprodukt voneinander getrennt. Die Analyse der Produkte erfolgte, getrennt nach Gas- und Flüssigprodukt, mit Hilfe der Kapillargaschromatographie. Die ermittelten Produktzusammensetzungen(in prozentualen Masseanteilen) sind in Tabelle 1 dargestellt.

Die Ergebnisse zeigen, daß in jedem Fall Produkte mit Monomerencharakter entstehen, die mengenmäßig stets im Bereich des praxisnahen Vergleichsbeispiels (Einsatzprodukt: reines Naphtha) liegen. Die Produktzusammensetzung wird im wesentlichen vom eingesetzten Polymerenlösungsmittel und weniger vom gelösten Polymeren selbst bestimmt. Das entstehende Produktgemisch läßt sich somit zwanglos in die konventionellen Stoffflüsse einer petrolchemischen Raffinerie einbeziehen.

### Beispiel 7

1 l PE/Dieselölgemisch mit einem Massenanteil von 15 % PE, das durch Auflösen von Rejects, bestehend aus 80 % PE und 18 % Al, hergestellt wurde, wurde auf 70 °C abgekühlt und im Gegenstrom mit 50 °C warmem Methanol ausgefällt. Der PE-Niederschlag wurde abfiltriert, mit Naphtha (Rohbenzin) und Methanol gewaschen, anschließend mit Wasser dispergiert. Nach einer Standzeit von wenigen Minuten trennte sich die Dispersion. Das auf dem Wasser schwimmende PE konnte leicht abgesaugt und getrocknet werden. Die im PE eingeschlossenen, fein verteilten Aluminiumflitter wurden durch den Dispergiervorgang freigelegt und sedimentierten im Wasser schnell zu Boden, wo sie abgetrennt und zentrifugiert werden konnten. Das abgesaugte PE wurde in verdünnter Mineralsäure dispergiert, um Al-Reste vollständig zu entfernen, abfiltriert, gewaschen, getrocknet und eingeschmolzen. Der Rest-Al-Gehalt betrug < 0,05 %. Die verwendeten Lösungsmittel wurden destillativ zurückgewonnen und rezykliert.

### Beispiel 8

1 l PE/Dieselölgemisch mit einem Massenanteil von 15 % PE, das durch Auflösen von Rejects, bestehend aus 80 % PE und 18 % Al, hergestellt wurde, wurde auf 70 °C abgekühlt und im Gegenstrom mit 50 °C warmem Isopropanol ausgefällt. Der PE-Niederschlag wurde abfiltriert, mit Isopropanol gewaschen, anschließend mit Wasser dispergiert. Nach einer Standzeit von wenigen Minuten trennte sich die Dispersion. Das auf dem Wasser schwimmende PE konnte leicht abgesaugt und getrocknet werden. Die im PE eingeschlossenen, fein verteilten Aluminium-flitter wurden durch den Dispergiervorgang freigelegt und sedimentierten im Wasser schnell zu Boden, wo sie abgetrennt und zentrifugiert werden konnten. Das abgesaugte PE wurde in verdünnter Mineralsäure dispergiert, um Al-Reste vollständig zu entfernen, abfiltriert, gewaschen, getrocknet und eingeschmolzen. Der Rest-Al-Gehalt betrug < 0,05 %. Die verwendeten Lösungsmittel wurden destillativ zurückgewonnen und rezykliert.

### Beispiel 9

1 l PE/Dieselölgemisch mit einem Massenanteil von 15 % PE, das durch Auflösen von Rejects, bestehend aus 80 % PE und 18 % Al, hergestellt wurde, wurde auf 70 °C abgekühlt und im Gegenstrom vom 50 °C warmem Naphtha (Rohbenzin) ausgefällt. Der PE-Niederschlag wurde abfiltriert, mit Naphtha gewaschen und anschließend im Vakuum getrocknet, wobei das Lösungsmittel zurückgewonnen wurde.
Das erhaltene PE enthielt <0,5 Gew.-% Al.

### Beispiel 10

1 l PE/Dieselölgemisch mit einem Massenanteil von 15 % PE, das durch Auflösen von Rejects, bestehend aus 80 % PE und 18 % Al, hergestellt wurde, wurde bei 90 °C mit verdünnter Mineralsäure behandelt, um Al-Reste aus dem Gemisch vollständig zu entfernen. Die organische Phase wurde abgetrennt, auf 70 °C abgekühlt und im Gegenstrom mit 50 °C warmem Propanol-2 ausgefällt. Der PE-Niederschlag wurde abfiltriert, mit Propanol-2 gewaschen, unter Vakuum getrocknet und eingeschmolzen.
Der Rest Al-Gehalt betrug < 0,05 %.
Die verwendeten Lösungsmittel wurden destillativ zurückgewonnen und rezykliert.

### Beispiel 11

1 l PE/Dieselölgemisch mit einem Massenanteil von 15 % PE, das durch das Auflösen von Rejects, bestehend aus 80 % PE und 18 % Al, hergestellt wurde, wurde in einem Separator von Al-Resten vollständig befreit, auf 70 °C abgekühlt und im Gegenstrom mit 50 °C warmem Propanol-2 ausgefällt. Der PE-Niederschlag wurde abfiltriert, mit Propanol-2 gewaschen, unter Vakuum getrocknet und eingeschmolzen.
Der Rest Al-Gehalt betrug < 0,05 %.
Die verwendeten Lösungsmittel wurden destillativ zurückgewonnen und rezykliert.

**Tabelle 1:**

| Zusammensetzung der Reaktionsprodukte, die bei der thermischen Spaltung von bei der Trennung von Verpackungsverbunden anfallenden Kohlenwasserstoff-Gemischen entstehen | | | | |
|---|---|---|---|---|
| Vers.-Nr. | 1 | 2 | 3 | 4 |
| | | | | |
| org. Einsatzprodukt Naphtha gem. Bsp. | 1 | 2 | 3 | 4 |
| | (Vgl.-bsp.) | | | |
| | | | | |
| Reaktionsprodukt: | | | | |
| CO, CO2 | 0,2 | 0,4 | 0,4 | 2,1 |
| H2 | 1,0 | 0,8 | 0,7 | 1,1 |
| CH4 | 14,3 | 12,3 | 11,5 | 12,1 |
| C2H6 | 5,3 | 4,0 | 3,7 | 4,2 |
| C2H4 | 28,7 | 24,4 | 21,3 | 24,6 |
| C2H2 | 1,1 | 1,0 | 1,1 | 1,1 |
| C3H8 | 0,7 | 0,7 | 0,8 | 0,7 |
| C3H6 | 12,4 | 10,9 | 10,5 | 9,2 |
| C3H4 | 0,2 | 0,1 | 0,1 | 0,2 |
| C4H10 (ges.) | 0,3 | 0,7 | 0,8 | 0,3 |
| C4H8 (ges.) | 8,1 | 10,1 | 10,5 | 9,2 |
| C4H6dien | 2,2 | 5,1 | 5,1 | 3,9 |
| C5+ | 25,5 | 29,5 | 33,5 | 29,3 |
| Aromaten, ges. | 10,5 | 11,5 | 12,1 | 17,2 |

### Bezugszeichenliste

- 1: Siedefraktion
- 2: Vorerhitzer
- 3: feste Phase
- 4: Verpackungsmaterial
- 5: Lösestufe
- 6: Abtrennung
- 7: nicht lösliche Verpackungsbestandteile
- 8: flüssiges Gemisch
- 9: Steamcracker
- 10: Spaltproduktgemisch
- 11: Trennstufe
- 12: Gasprodukt
- 13: Flüssigprodukt
- 14: Trennstufe
- 15: Wäsche
- 16: Trockner
- 17: Fällungsstufe
- 18: Fällungsmittel
- 19: Filtration
- 20: Wäsche
- 21: Destillation
- 22: Lösungsmittel- Fällungsmittel-Gemisch
- 23: Lösungsmittel
- 24: Lösungsmittelrückführung
- 25: Polymer
- 26: Metall
- 27: Lösungsmittel

## Patentansprüche

1. Verfahren zur Aufbereitung von Verpackungsmaterialien, die ein oder mehrere synthetische Polymere und/oder natürliche Polymere und ggf. Metall enthalten, unter zumindest temporärer Auflösung des Polymeranteils in einem geeigneten Lösungsmittel und gleichzeitiger Abtrennung nicht löslicher Bestandteile aus dem Verpackungsverbund, wobei der Gesamtprozeß ein praktisch vollständiges stoffliches Rezyklieren der Einzelkomponenten der Verpackungsmaterialien beinhaltet, die Verpackungsmaterialien mit einem Lösungsmittel, bestehend aus aliphatischen, naphthenischen oder aromatischen Kohlenwasserstoffen, wie sie als Siedefraktion der primären oder sekundären Erdölverarbeitung mit einer Siedegrenze im Bereich von 40 bis 500 °C anfallen, deren hydrierten Produkten oder einer Mischung davon, bei Temperaturen zwischen 0 und 500 °C behandelt werden, wobei die unter den genannten Bedingungen nicht löslichen Verpackungsbestandteile aus dem flüssigen Gemisch abgetrennt werden, der gelöste Polymeranteil aus dem flüssigen Gemisch abgetrennt wird, und ggf. die unter den genannten Bedingungen nicht löslichen Verpackungsbestandteile unter Verwendung eines geeigneten Waschmittels unter anschließender Rezyklierung desselben von anhaftendem Lösungsmittel und/oder Polymer befreit werden, **dadurch gekennzeichnet,** daß die Abtrennung des gelösten Polymeranteils durch thermische Spaltung des flüssigen Gemisches bei Temperaturen zwischen 400 und 2000 °C und einem Druck zwischen 0,1 und 3,0 MPa erfolgt, wobei das Lösungsmittel zusammen mit den gelösten Polymerbestandteilen zu Spaltprodukten mit monomerem Charakter umgesetzt werden.

2. Verfahren nach Anspruch 1, **dadurch gekennzeichnet,** daß die thermische Spaltung bei Temperaturen zwischen 650 und 1.200 °C und einem Druck zwischen 0,1 und 0,3 MPa durchgeführt wird.

3. Verfahren nach einem der Ansprüche 1 bis 2, **dadurch gekennzeichnet,** daß die thermische Spaltung in Gegenwart von Wasserdampf durchgeführt wird, wobei die eingebrachte Menge an Wasserdampf 0,1 bis 100,0 prozentuale Massenanteile bezogen auf das flüssige organische Einsatzprodukt beträgt.

4. Verfahren nach einem der Ansprüche 1 bis 3, **dadurch gekennzeichnet,** daß die thermische Spaltung in einem Aggregat durchgeführt wird, das nach dem Verfahrensprinzip eines Strömungsrohrreaktors arbeitet.

5. Verfahren nach einem der Ansprüche 1 bis 4, **dadurch gekennzeichnet,** daß das Verfahren integriert ist in einen Anlagebereich einer petrolchemischem Raffinerie, in dem eine Siedefraktion einem Steamcracker zugeführt wird, wobei das nach Umsetzung des Lösungsmittels mit dem Verpackungsmaterial und Abtrennung nicht löslicher Verpackungsbestandteile erhaltene flüssige Gemisch aus Kohlenwasserstoffen unterschiedlicher Struktur und Molekülmasse der Siedefraktion zugemischt wird und die resultierende Gesamtmischung im Steamcracker thermisch gespalten wird.

6. Verfahren nach Anspruch 5, **dadurch gekennzeichnet,** daß als Lösungsmittel ein Teil der Siedefraktion verwendet wird.

7. Verfahren nach Anspruch 5, **dadurch gekennzeichnet,** daß das im Steamcracker erzeugte Spaltproduktgemisch in ein Gasprodukt und ein Flüssigprodukt zerlegt wird, wobei das erhaltene Flüssigprodukt, wie zum Beispiel Pyrolysebenzin, als Lösungsmittel für die Behandlung des Verpackungsmaterials verwendet wird.

8. Verfahren nach einem der Ansprüche 1 bis 7, **dadurch gekennzeichnet,** daß als Verpackungsmaterialien Verpackungsverbunde, bestehend aus Kombinationen der Systeme synthetisches Polymer/Aluminium, synthetisches Polymer/Karton bzw. Papier und/oder synthetisches Polymer/Aluminium/Karton bzw. Papier eingesetzt werden.

9. Verfahren nach einem der Ansprüche 1 bis 8, **dadurch gekennzeichnet,** daß als synthetisches Polymer Einzelstoffe und/oder Kombinationen von Polyolefinen, Polyester, Polyamiden und Polyurethanen eingesetzt werden.

## Claims

1. Process for treating packaging materials containing one or more synthetic polymers and/or natural polymers and possibly metal, with at least temporary dissolution of the polymer component in a suitable solvent and simultaneous removal of insoluble constituents from the packaging mixture, where the overall process includes virtually complete physical recycling of the individual components of the packaging materials, the packaging materials are treated with a solvent comprising aliphatic, naphthenic or aromatic hydrocarbons, as obtained as the light fraction from primary or secondary petroleum refining with a boiling limit in the range from 40 to 500°C, hydrogenated products thereof or mixtures thereof, at temperatures between 0 and 500°C, the packaging constituents which are insoluble under said conditions are removed from the liquid mixture, the dissolved polymer component is removed from the liquid mixture, and, if appropriate, the packaging constituents which are insoluble under said conditions are freed from residual solvent and/or polymer using a suitable washing agent with subsequent recycling thereof, characterized in that the removal of the dissolved polymer component is effected by thermolysis of the liquid mixture at temperatures between 400 and 2000°C and a pressure of between 0.1 and 3.0 MPa, where the solvent together with the dissolved polymer constituents are converted into cracking products having a monomeric character.

2. Process according to Claim 1, characterized in that the thermolysis is carried out at temperatures of between 650 and 1,200°C and a pressure of between 0.1 and 0.3 MPa.

3. Process according to one of Claims 1 to 2, characterized in that the thermolysis is carried out in the presence of steam, where the amount of steam introduced is from 0.1 to 100.0 per cent by weight, based on the liquid organic feedstock.

4. Process according to one of Claims 1 to 3, characterized in that the thermolysis is carried out in equipment which operates on the flow-tube reactor principle.

5. Process according to one of Claims 1 to 4, characterized in that the process is integrated into a plant part of a petrochemical refinery, in which a light fraction is fed to a steam cracker, where the liquid mixture of hydrocarbons of various structure and molecular weight which is obtained after reaction of the solvent with the packaging material and removal of insoluble packaging constituents is admixed with the light fraction, and the resultant overall mixture is thermolised in the steam cracker.

6. Process according to Claim 5, characterized in that the solvent used is part of the light fraction.

7. Process according to Claim 5, characterized in that the cracking product mixture produced in the steam cracker is split into a gas product and a liquid product, the liquid product obtained, such as, for example, pyrolysis benzine, being used as solvent for the treatment of the packaging material.

8. Process according to one of Claims 1 to 7, characterized in that the packaging materials employed are packaging mixtures comprising combinations of the synthetic polymer/aluminium, synthetic polymer/board or paper and/or synthetic polymer/aluminium/board or paper systems.

9. Process according to one of Claims 1 to 8, characterized in that the synthetic polymer employed comprises individual substances and/or combinations of polyolefins, polyesters, polyamides and polyurethanes.

## Revendications

1. Procédé de préparation de matières d'emballage, qui contiennent un ou plusieurs polymère(s) synthétique(s) et/ou des polymères naturels et/ou éventuellement un métal, avec dissolution au moins temporaire de la fraction de polymères dans un solvant approprié et séparation simultanée des composants non solubles hors du composite d'emballage, dans lequel l'ensemble du procédé comporte un recyclage matériel pratiquement total des composants individuels des matières d'emballage, les matières d'emballage sont traitées à des températures comprises entre 0 et 500°C avec un solvant se composant d'hydrocarbures aliphatiques, naphténiques ou aromatiques, tels qu'ils se forment comme fraction de distillation du traitement primaire ou secondaire du pétrole avec une limite d'ébullition comprise dans le domaine de 40 à 500°C, de leurs produits hydrogénés ou d'un mélange de ceux-ci, dans lequel les composants de l'emballage non solubles dans les conditions précitées sont séparés du mélange liquide, la fraction de polymères dissoute est séparée du mélange liquide, et le cas échéant les composants de l'emballage non solubles dans les conditions précitées sont débarrassés du solvant et/ou du polymère adhérent en utilisant un agent de lavage approprié avec recyclage subséquent de ceux-ci, caractérisé en ce que la séparation de la fraction de polymères dissoute est réalisée par décomposition thermique du mélange liquide à des températures comprises entre 400 et 2000°C et sous une pression comprise entre 0,1 et 3,0 MPa, dans lequel le solvant est converti, en même temps que les composants de polymères dissous, en produits de décomposition à caractère monomère.

2. Procédé suivant la revendication 1, caractérisé en ce que la décomposition thermique est effectuée à des températures comprises entre 650 et 1200°C et sous une pression comprise entre 0,1 et 0,3 MPa.

3. Procédé suivant l'une quelconque des revendications 1 à 2, caractérisé en ce que la décomposition thermique est effectuée en présence de vapeur d'eau, la quantité de vapeur d'eau introduite valant de 0,1 à 100,0 pour-cent en masse, rapportée au produit organique liquide mis en oeuvre.

4. Procédé suivant l'une quelconque des revendications 1 à 3, caractérisé en ce que la décomposition thermique est effectuée dans un groupe, qui travaille suivant le principe de fonctionnement d'un réacteur tubulaire à écoulement.

5. Procédé suivant l'une quelconque des revendications 1 à 4, caractérisé en ce que le procédé est intégré dans une partie d'installation d'une raffinerie pétrochimique, dans laquelle une fraction de distillation est envoyée à un dispositif de craquage à la vapeur, dans lequel le mélange liquide constitué d'hydrocarbures de structures et de masses moléculaires différentes, obtenu après la conversion du solvant avec la matière d'emballage et la séparation des composants non solubles de la matière d'emballage, est mélangé à la fraction de distillation et le mélange global résultant est thermiquement décomposé dans le dispositif de craquage à la vapeur.

6. Procédé suivant la revendication 5, caractérisé en ce que l'on utilise comme solvant une partie de la fraction de distillation.

7. Procédé suivant la revendication 5, caractérisé en ce que le mélange de produits de décomposition obtenu dans le dispositif de craquage à la vapeur est décomposé en un produit gazeux et un produit liquide, le produit liquide obtenu, comme par exemple l'essence de pyrolyse, étant utilisé comme solvant pour le traitement de la matière d'emballage.

8. Procédé suivant l'une quelconque des revendications 1 à 7, caractérisé en ce que l'on emploie comme matières d'emballage, des composites d'emballage, se composant de combinaisons de systèmes polymère synthétique/aluminium, polymère synthétique/carton respectivement papier et/ou polymère synthétique/ aluminium-carton respectivement papier.

9. Procédé suivant l'une quelconque des revendications 1 à 8, caractérisé en ce que l'on emploie comme polymère synthétique des matières isolées et/ou des combinaisons de polyoléfines, de polyesters, de polyamides et de polyuréthanes.
